# DEMANDE DE BREVET EUROPEEN

(11) **EP 0 718 787 A1**
(43) Date de publication de la demande: **26.06.1996**
(21) Numéro de dépôt: 95402855.1
(22) Date de dépôt: 18.12.1995
(51) Int. Cl.: G06K 7/10, G06K 7/14

(54) **Dispositif de lecture d'un code à barres pour une installation de tri postal**

(30) Priorité: 22.12.1994 FR 9415490
(71) Demandeur: Alcatel Postal Automation Systems, F-94250 Gentilly (FR)
(72) Inventeur: Mitte, Claude, F-95370 Montigny L. Cormeilles (FR); Micaletti, Gilbert, F-77400 Pomponne (FR)
(74) Mandataire: Schaub, Bernard

(57) **Abrégé**

Un dispositif de lecture d'un code à barres (41) imprimé sur un support plat (4), comprenant une caméra (2) du type à transfert de charges ("CCD") linéaire ayant des éléments photosensibles disposés suivant une rangée (21) s'étendant parallèlement aux barres du code à lire sur le support et un système d'éclairage (31,32) de la face imprimée du support, ce système d'éclairage définissant une fente (33) s'étendant parallèlement à la rangée de photodiodes et à travers laquelle la caméra observe les barres du code.
Application à la lecture de codes d'indexation dans les installations de tri postal.

## Description

L'invention porte sur un dispositif de lecture d'un code à barres imprimé sur un support plat.

Un tel dispositif est destiné en particulier pour équiper une installation postale en vue de lire les codes d'indexation à barres imprimés sur les articles de courrier à traiter par l'installation, notamment pour le tri automatique de ces articles de courrier.

Les barres du code d'indexation peuvent être imprimées à l'aide d'une encre fluorescente, non fluorescente ou autre suivant les contraintes imposées par les administrations postales.

Le but de l'invention est de proposer un dispositif de lecture d'un code d'indexation de faible coût de revient, performant et simple de conception.

A cet effet, l'invention a pour objet un dispositif de lecture d'un code à barres imprimé sur un support plat, comprenant une caméra du type à transfert de charge ("CCD" en anglais) linéaire ayant des éléments photosensibles disposés suivant une rangée s'étendant parallèlement aux barres du code à lire sur le support et un système d'éclairage de la face imprimée du support, ce système d'éclairage définissant une fente s'étendant parallèlement à la rangée de photodiodes et à travers laquelle la caméra observe les barres du code. Plus particulièrement, selon l'invention, le système d'éclairage est constitué par une lampe froide basse tension comprenant deux bâtonnets parallèles définissant entre eux ladite fente. L'agencement proposé est d'un coût de revient faible, comparativement à des technologies analogues à base d'une caméra du type à intégration avec un temps de retard ("TDI" en anglais), offre de bonnes performances quel que soit le type d'encre utilisé pour l'impression du code à barres. En particulier il est aisé de changer la lampe froide basse tension pour adapter le dispositif de lecture selon l'invention aux différents types d'encre utilisés dans le domaine postal afin de couvrir une large gamme spectrale d'excitations lumineuses allant du bleu aux ultras violets. On entend ici par lampe froide basse tension à deux bâtonnets, une lampe froide basse tension du commerce comprenant deux branches ou tubes néon parallèles et solidiaires montés sur un support commun.

Un mode de réalisation de l'invention est décrit ci-après en référence aux dessins.

La figure 1 montre en perspective et de façon schématique le dispositif de lecture selon l'invention.

La figure 2 est une vue de dessus d'une partie d'une installation postale incorporant le dispositif de lecture selon l'invention.

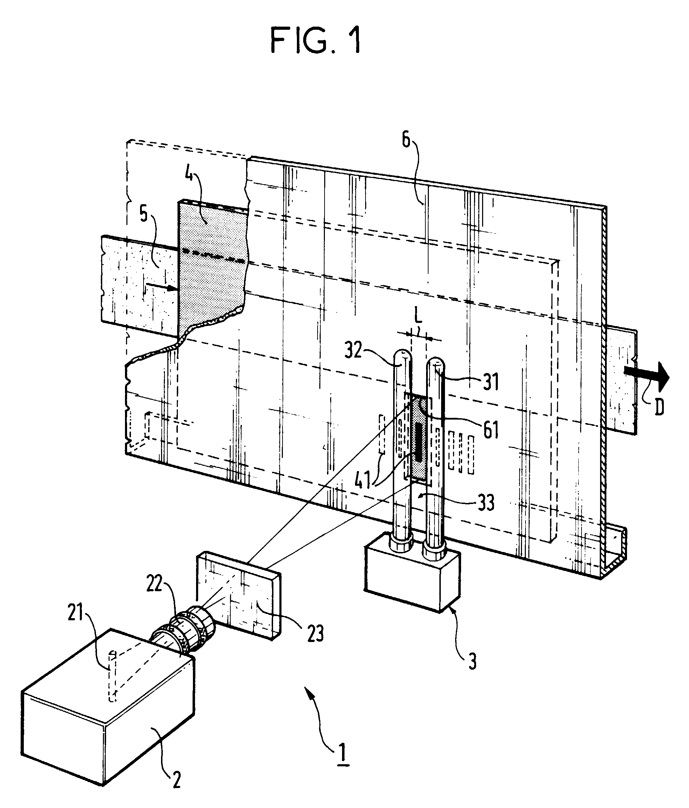

Figure 1, le dispositif de lecture 1 sert à la lecture de barres 41 d'un code imprimé sur une face d'un support plat 4. Il comprend une caméra 2 du type "CCD" linéaire, comme une caméra de la société "DALSA". Cette caméra comporte une barrette 21 d'éléments photosensibles à couplage de charge, typiquement 512 éléments photosensibles, disposés suivant une rangée qui s'étend suivant une direction parallèle aux barres 41 du code à lire sur la face imprimée du support. La caméra est aussi munie d'un objectif 22 et d'un filtre 23. Dans l'exemple considéré, la caméra est fixe et le support plat est déplacé suivant la direction D dans le champ de vision de la caméra. En particulier, le support plat est déplacé sur une plaque de référence 6 à l'aide d'une ou plusieurs bandes de convoyage telle la bande 5 et il est prévu une ouverture 61 dans la plaque 6 dans laquelle apparaissent successivement les barres 41 du code imprimé sur la face du support.

La caméra "CCD" fonctionne avec un système d'éclairage 3 qui illumine, à travers l'ouverture 61, la face imprimée du support, l'énergie lumineuse rétrodiffusée par cette face du support venant exciter les éléments photosensibles de la caméra.

Selon l'invention, le système d'éclairage 3 comprend deux bâtonnets d'éclairage au néon 31 et 32 qui s'étendent l'un parallèlement à l'autre en définissant entre eux une fente 33 à travers laquelle la caméra observe successivement les barres 41 du code apparaissant dans l'ouverture 61. Une lampe froide basse tension du commerce, ayant un tube néon replié formant les deux bâtonnets, vendue par la société "DULUX", convient bien car une caméra du type "CCD" linéaire requiert un passage de scène de faible dimension contrairement à une caméra du type "TDI". Typiquement, la largeur L entre les deux bâtonnets est d'environ 2 à 3 mm. Dans ce genre de lampe basse tension, les bâtonnets sont montés sur un support commun équipé de broches de connexion de sorte que le système d'éclairage dans le dispositif de lecture selon l'invention est facilement interchangeable.

En outre, selon l'invention, la lampe 3 est montée entre la caméra 2 et la plaque 6 de telle façon que la fente 33 s'étende parallèlement à la barrette 21 de la caméra (et donc parallèlement à chaque barre du code à lire), une seule barre étant visible à travers la fente 33, à un instant donné, pour la caméra.

Un tel agencement permet de monter le système d'éclairage à proximité de la face imprimée du support plat 4 afin de réduire les pertes d'énergie lumineuse. Typiquement, les bâtonnets 31 et 32 sont montés à environ 3 mm de la face imprimée du support plat tandis que l'objectif 22 de la caméra est monté à environ 150 mm des bâtonnets.

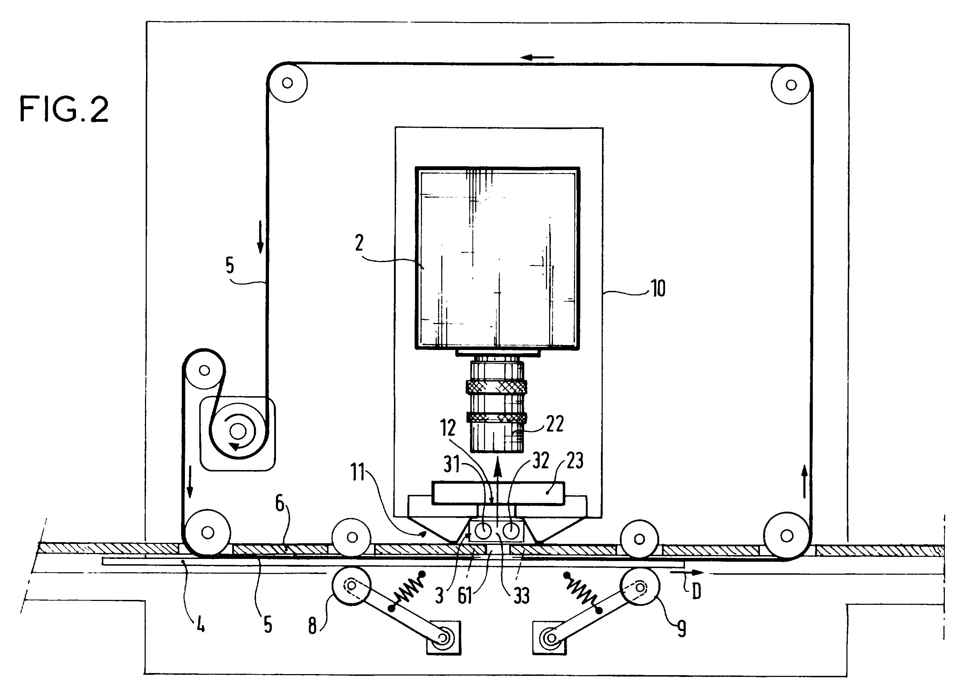

Figure 2, le dispositif de lecture selon l'invention se présente sous la forme d'un boîtier compact 10 à l'intérieur duquel est montée la caméra "CCD" linéaire 2 équipée d'un objectif 22 et d'un filtre 23. Une face 11 du boîtier située dans le champ de vision de la caméra présente une ouverture 12 et définie un renfoncement. La lampe froide basse tension 3 est montée de façon interchangeable à l'extérieur du boîtier 10 dans le renfoncement et en vis-à-vis de l'ouverture 12 de sorte que la lampe peut facilement être remplacée.

Le boîtier 10 est monté dans une installation postale pour le traitement d'articles de courrier, chaque article de courrier ayant une face sur laquelle est imprimée un code à barres dit code d'indexation.

L'installation inclut la plaque de référence 6 munie de l'ouverture 61, une bande sans fin 5 de convoyage des articles de courrier entraînée par galets tel que 7 et qui fait défiler chaque article face au dispositif de lecture comme indiqué ci-dessus. Des rouleaux presseurs 8 et 9 sont prévus pour plaquer chaque article de courrier contre la plaque 6 à proximité de l'ouverture 61.

A noter que le code d'indexation à barres imprimé sur chaque article de courrier peut être du type à modulation de largeur ou à modulation de hauteur.

## Revendications

1. Un dispositif de lecture d'un code à barres (41) imprimé sur un support plat (4), comprenant une caméra (2) du type à transfert de charges ("CCD") linéaire ayant des éléments photosensibles disposés suivant une rangée (21) s'étendant parallèlement aux barres du code à lire sur le support et un système d'éclairage (31,32) de la face imprimée du support, caractérisé en ce que le système d'éclairage est une lampe froide basse tension comportant deux bâtonnets d'éclairage (31,32) parallèles définissant entre eux une fente (33) d'observation du support pour la caméra, cette fente s'étendant parallèlement à la rangée de photodiodes et ayant une largeur telle que la caméra peut observer une seule barre de code à la fois à travers la fente.

2. Le dispositif selon la revendication 1, dans lequel la fente (33) a une largeur d'environ 2 à 3 mm.

3. Le dispositif selon l'une des revendications 1 ou 2, dans lequel les bâtonnets d'éclairage (31,32) de la lampe froide sont montés de façon interchangeable sur un support commun (3) équipé de broches de connexion.

4. Le dispositif selon l'une des revendications 1 à 3, comprenant un boîtier (10) à l'intérieur duquel est montée la caméra (2) équipée d'un objectif (22) et d'un filtre (23), une face (11) dudit boîtier située dans le champ de vision de la caméra présentant une ouverture (12) et définissant un renfoncement, la lampe froide (3) étant montée à l'extérieur du boîtier dans le renfoncement et en vis-à-vis de l'ouverture pour être facilement remplacée.

5. Installation postale comprenant un dispositif de lecture selon l'une des revendications 1 à 4 pour la lecture d'un code d'indexation à barres imprimé sur un article de courrier.
